# FASCICULE DE BREVET EUROPEEN

(11) **EP 0 343 313 B1**
(45) Date de publication et mention de la délivrance du brevet: **28.09.1994**
(21) Numéro de dépôt: 88870099.4
(22) Date de dépôt: 27.05.1988
(51) Int. Cl.: H02K 17/16

(54) **Moteur électrique de puissance élevée et à vitesse de rotation élevée**
Elektrischer Motor hoher Leistung und hoher Umdrehungsgeschwindigkeit
Electric motor of high power and high rotation speed

(43) Date de publication de la demande: 29.11.1989
(73) Titulaire: GEC ALSTHOM ACEC ENERGIE S.A., 6030 Charleroi (BE)
(72) Inventeur: Bawin, Pierre, B-6100 Mont-sur-Marchienne (BE); Gilon, Dominique, B-1410 Waterloo (BE)
(74) Mandataire: van Malderen, Michel

(56) Documents cités:
- EP-A- 0 225 440
- DE-A- 2 721 211
- DE-A- 3 130 974
- FR-A- 2 135 930
- US-A- 3 517 238

## Description

### Objet de l'invention

La présente invention concerne un moteur électrique de grande puissance qui est destiné à fonctionner à des vitesses de rotation très élevées. Elle concerne plus particulièrement des perfectionnements apportés au rotor d'un tel moteur électrique, notamment un moteur asynchrone.

### Domaine technique de l'invention

Il existe actuellement un besoin de disposer de moteurs électriques puissants qui peuvent fonctionner à vitesse de rotation élevée, à savoir de l'ordre de 10.000 t/min et plus.

Les améliorations apportées aux semi-conducteurs constituant l'électronique de puissance permettent actuellement de commander des moteurs asynchrones de puissance élevée à fréquence variable et donc de réguler la vitesse de rotation des moteurs asynchrones qui peuvent afficher des puissances de l'ordre de 6 MW et plus.

Lancer de grosses machines à des vitesses de rotation de l'ordre de grandeur susmentionné pose toutefois des difficultés d'ordre mécanique, notamment en ce qui concerne la résistance des parties mobiles de ces machines, en l'occurence le rotor.

Dans un rotor de construction classique, la seule raideur de l'arbre n'assure pas une rigidité suffisante à l'ensemble du rotor pour lui permettre d'atteindre des vitesses de rotation très élevées sans rencontrer une première vitesse critique.

### Buts de l'invention

La présente invention vise, par conséquent, à fournir un moteur électrique puissant, amélioré de telle sorte que ledit moteur peut fonctionner à des vitesses élevées.

Un but complémentaire de la présente invention consiste à fournir une amelioration telle, notamment au rotor dudit moteur, que lapremière vitesse critique soit rejetée au-delà de la vitesse maximum de rotation.

### Eléments caractéristiques de l'invention

Les buts de la présente invention sont atteints par un moteur électrique puissant comportant un rotor dont la cage d'écureuil participe au raidissement du rotor destiné à tourner à vitesse très élevée autour de l'axe du moteur.

Selon la présente invention, le rotor comporte un arbre sur lequel une masse magnétique est montée par serrage et est maintenue par deux plateaux rendus solidaires dudit arbre. Lesdits plateaux qui font office d'anneaux de court-circuitsont reliés par des barres pour former une cage d'écureuil et sont de préférence constitués par une matière à résistance mécanique élevée et à résistivité électrique faible.

Selon l'invention, les plateaux sont rendus solidaires dudit arbre par frettage, notamment un frettage très important portant la contrainte subie par les plateaux à proximité de la limite élastique. En effet, vu les vitesses de rotation particulièrement élevées, il y a lieu de prévoir un assemblage particulièrement résistant aux effets centrifuges.

Pour des raisons analogues, les barres reliant lesdits plateaux sont également rendues solidaires de ceux-ci par serrage. En effet, lesdites barres sont logées dans des orifices adéquats pratiqués à la périphérie desdits plateaux et les extrémités de celles-ci sont ensuite dilatées par l'introduction de broches coniques.

On utilise avantageusement des matériaux comme les cuivres alliés et traités, présentant une bonne résistance mécanique et une faible résistivité électrique.

En vue de conserver les bonnes propriétés mécaniques aux matériaux utilisés, il est important d'éviter autant que possible des assemblages par soudage ou brasage. Par ailleurs, les assemblages utilisés doivent également garantir un bon contact électrique.

On constate aisément que la cage d'écureuil ainsi agencée contribue à augmenter fortement la raideur de l'arbre et permet donc de refouler la première vitesse critique à des valeurs se situant au-delà des vitesses de fonctionnement particulièrement élevées de la machine conforme à la présente invention.

De préférence, l'arbre du moteur électrique est monté sur des paliers magnétiques connus en soi qui réduisent les pertes par frottement et qui permettent des vitesses de rotation très élevées. Les paliers magnétiques ont également l'avantage de ne nécessiter quasi aucun entretien et de permettre une commande et un contrôle à distance.

Vu les vitesses élevées auxquelles est soumise la machine conforme à la présente invention, il est bien entendu important d'apporter un soin tout particulier à l'exécution de l'entrefer; celui-ci doit être lisse de manière à éviter les remous générateurs de pertes de charges. C'est pourquoi il est opportun d'usiner le rotor dès que les tôles magnétiques ont été montées sur l'arbre.

Selon la technique classique de l'assemblage des moteurs électriques, les encoches statoriques sont fermées par des cales qui n'affleurent pas l'alésage du stator. Dans la réalisation préférentielle de l'invention, les cales utilisées dépassent, après leur placement dans les encoches, le niveau de l'alésage du stator. Cela permet, lors d'un usinage ultérieur, d'obtenir un alésage statorique absolument lisse de manière à réduire davantage les pertes par ventilation.

En vue de réduire les contraintes mécaniques dues aux efforts centrifuges générés aux grandes vitesses, il peut également être avantageux de supprimer les trous d'entraînement et de repère du sens de laminage des tôles rotoriques, notamment par une étape de découpage supplémentaire faite à la suite de la découpe des encoches des barres de la cage d'écureuil.

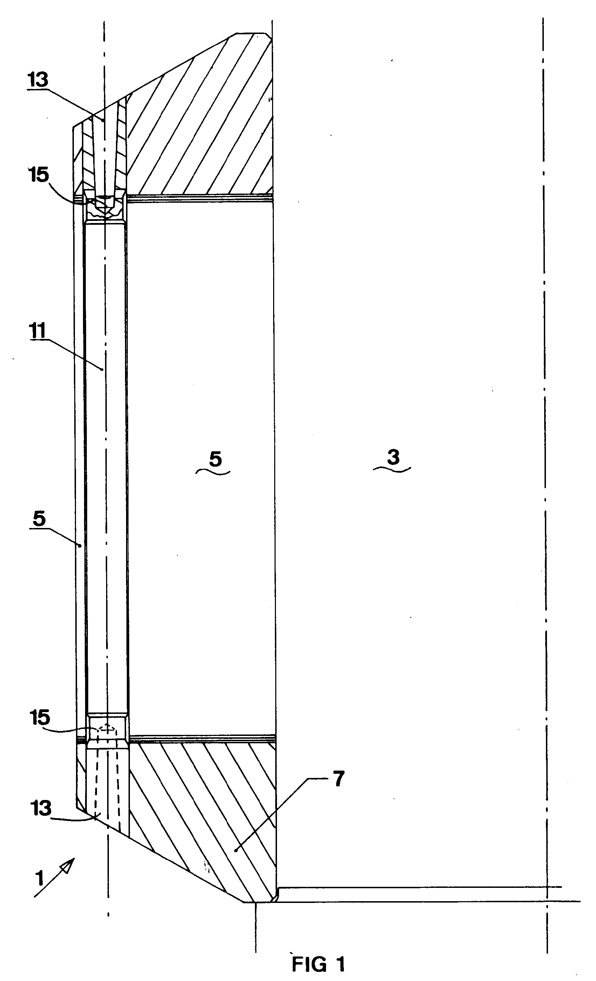

### Brève description de la figure

L'invention sera décrite plus en détail en référence à la figure annexée qui représente schématiquement une coupe longitudinale partielle dans un rotor de moteur électrique conforme à la présente invention.

### Description d'une forme d'exécution préférée de l'invention

A la figure annexée, on a uniquement représenté le rotor d'un moteur conforme à la présente invention, en faisant abstraction du stator.

Le rotor 1 comporte un arbre 3 supporté de part et d'autre sur des paliers magnétiques (non représentés). Une masse magnétique 5 constituée par des tôles rotoriques judicieusement orientées est supportée par ledit arbre, les tôles rotoriques étant maintenues par serrage sur celui-ci.

Les tôles rotoriques 5 sont serrées l'une contre l'autre par deux plateaux 7 et 9 disposés à chaque extrémité de la masse magnétique 5 et frettés sur l'arbre 3. Ces plateaux 7 et 9, réunis entre eux par des barres 11 pour former la cage d'écureuil du rotor font office d'anneau de court-circuit et assurent une liaison mécanique rigide entre l'arbre 3 et les barres de la cage d'écureuil de manière à augmenter la raideur de l'ensemble du rotor.

Les barres 11 sont assemblés par serrage auxdits plateaux 7 et 9. En effet, les barres 11 pénètrent dans des orifices correspondant pratiqués à la périphérie des plateaux 7 et 9 et y sont serrées grâce à l'enfoncement de broches coniques 13 dans des alésages longitudinaux 15 pratiqués aux extrémités des barres 11.

Avantageusement, les barres 11 et les plateaux 7 et 9 sont constitués de cuivre allié présentant une résistance mécanique élevée et une résistivité électrique faible.

En vue d'éviter des pertes de charge créées par des irrégularités de surface extérieure du rotor, dues à l'assemblage de tôles rotoriques dont les dimensions peuvent légèrement varier, il est avantageux d'usiner la surface extérieure du rotor.

Par ailleurs, pour éviter la formation d'amorces de rupture dues aux efforts centrifuges, il est avantageux de supprimer les perforations d'entraînement qui permettent l'introduction d'un organe d'entraînement en rotation en vue de la découpe des encoches des conducteurs rotoriques et les perforations de repérage du grain de laminage des tôles. En effet, ces perforations se situent en général à proximité du centre des tôles rotoriques et peuvent étre éliminées par une opération de découpe destinée à porter le diamètre intérieur à la valeur exigée pour le montage sur l'arbre.

Le stator également peut subir quelque traitement permettant une mise en forme adéquate de la surface intérieure orientée vers le rotor, notamment par l'usinage des cales d'encoches.

Selon la présente invention, on a construit une machine d'une puissance de l'ordre de 6 MW à 10000 t/min) dont la première vitesse critique est située aux environs de 13000 t/min).

## Revendications

1. Moteur électrique de puissance élevée et vitesse de rotation élevée comportant un rotor et un stator, le rotor (1) comprenant un arbre (3) sur lequel une masse magnétique constituée de tôles rotoriques est montée par serrage et est maintenue par serrage par deux plateaux (7, 9) rendus solidaires dudit arbre (3) caractérisé en ce que les deux plateaux (7, 9) qui sont utilisés comme anneaux de court-circuit d'une cage d'écureuil, sont solidaires dudit arbre (3) par frettage.

2. Moteur électrique selon la revendication 1 caractérisé en ce que les barres (11) reliant les plateaux (7, 9) pénètrent dans des orifices adéquats (15) pratiqués à la périphérie desdits plateaux (7, 9).

3. Moteur électrique selon la revendication 1 ou 2 caractérisé en ce que les barres (11) sont reliées aux plateaux (7, 9) par serrage, grace à des broches coniques (13) enfoncées dans les extrémités des barres (11) introduites dans des ouvertures correspondantes pratiquées dans les plateaux (7, 9).

4. Moteur électrique selon l'unequelconque des revendications précédentes caractérisé en ce que lesdits plateaux (7, 9) et lesdites barres (11) sont constitués par une matière à résistance mécanique élevée et à résistivité électrique faible.

5. Moteur électrique selon la revendication 4 caractérisé en ce que les plateaux (7, 9) et les barres (11) sont en cuivre allié et traité.

6. Moteur électrique selon l'une quelconque des revendications précédentescaractérisé en ce que le rotor est logé dans des paliers magnétiques.

7. Moteur électrique selon l'une quelconque des revendications précédentes caractérisé en ce que les cales de recouvrement des encoches de cablage du stator sont arasées jusqu'au niveau de la surface intérieure lisse du stator.

## Patentansprüche

1. Elektromotor mit hoher Leistung und hoher Drehzahl, der einen Rotor und einen Stator umfaßt, wobei der Rotor (1) eine Welle (3) aufweist, auf der eine aus Rotorblechen bestehende, magnetische Masse durch Festklemmen angebracht ist und durch Festklemmen durch zwei Platten (7, 9) festgehalten wird, die mit der Welle (3) fest verbunden sind, dadurch gekennzeichnet, daß die zwei Platten (7, 9), die als Kurzschlußringe einer Käfigwicklung verwendet werden, mit der Welle (3) durch Aufschrumpfen fest verbunden sind.

2. Elektromotor gemäß Anspruch 1, dadurch gekennzeichnet, daß die Stäbe (11), die die Platten (7, 9) miteinander verbinden, in entsprechenden Öffnungen (15) angeordnet sind, die bei dem Umfang der Platten (7, 9) angebracht sind.

3. Elektromotor gemäß Anspruch 1 oder 2, dadurch gekennzeichnet, daß die Stäbe (11) durch Festklemmen mittels konischer Dorne (13) mit den Platten (7, 9) verbunden sind, wobei diese Dorne in die Enden der Stäbe (11) eingetrieben sind, die in entsprechende, in den Platten (7, 9) angebrachte Öffnungen eingeschoben sind.

4. Elektromotor gemäß irgendeinem der vorhergehenden Ansprüche, dadurch gekennzeichnet, daß die Platten (7, 9) und die Stäbe (11) aus einem Material mit hoher mechanischer Festigkeit und niedrigem spezifischem elektrischem Widerstand bestehen.

5. Elektromotor gemäß Anspruch 4, dadurch gekennzeichnet, daß die Platten (7, 9) und die Stäbe (11) aus legiertem und behandeltem Kupfer sind.

6. Elektromotor gemäß irgendeinem der vorhergehenden Ansprüche, dadurch gekennzeichnet, daß der Rotor in magnetischen Lagern gelagert ist.

7. Elektromotor gemäß irgendeinem der vorhergehenden Ansprüche, dadurch gekennzeichnet, daß die Keile zum Bedecken der Verdrahtungsnuten des Stators bis zu dem Niveau der glatten inneren Oberfläche des Stators abgeschliffen sind.

## Claims

1. High duty high rotational speed electric motor comprising a rotor and a stator, said rotor (1) comprising a shaft (3) on which a magnetic mass formed with metal sheets is mounted by locking and is hold by locking of two plates (7, 9) fitted together with said shaft (3), characterized in that both plates (7, 9) which are used as short-circuit rings of a squirrel cage, are shrunk fitted together with said shaft (3).

2. Electric motor according to claim 1, characterized in that the rods (11) connecting said plates (7, 9) are introduced into appropriate holes (15) formed on the periphery of said plates (7, 9).

3. Electric motor according to claim 1 or 2, characterized in that said rods (11) are connected to said plates (7, 9) by locking through conical spindles (13) inserted into the ends of said rods (11) inserted into corresponding openings made in said plates (7, 9).

4. Electric motor according to any of preceding claims, characterized in that said plates (7, 9) and said rods (11) are made of a material with a high mechanical strength and a low electrical resistivity.

5. Electric motor according to claim 4, characterized in that said plates (7, 9) and said rods (11) are made of treated alloyed copper.

6. Electric motor according to any of preceding claims, characterized in that said rotor is nested in magnetical bearings.

7. Electric motor according to any of preceding claims, characterized in that the blocks covering the stator circuit slots are levelled to the level of the smooth internal surface of said stator.
